# EUROPEAN PATENT APPLICATION

(11) **EP 4 621 382 A1**
(43) Date of publication of application: **24.09.2025**
(21) Application number: 24305403.8
(22) Date of filing: 18.03.2024
(51) Int. Cl.: G01N 17/02

(54) **DEVICE FOR ELECTROCHEMICAL CORROSION MONITORING AND METHOD THEREOF**

(71) Applicant: Université de Bourgogne, 21000 Dijon (FR); Centre National de la Recherche Scientifique, 75016 Paris (FR)
(72) Inventor: VIGNAL, Vincent, 21270 Binges (FR); ERAZMUS, Paulina, 21270 Binges (FR)
(74) Representative: IPAZ

(57) **Abstract**

Device for electrochemical corrosion monitoring (1) of an on-site conductive material (5) comprising at least two compartments (2), each of the compartments is suitable to form an electrochemical cell and comprises two valves (31, 32) being respectively positioned at a upper face (41) and at a lower face (42) of the device, each of the valves being arranged to selectively close and open the upper face or the lower face of its respective compartment so that each compartment is selectively, partly or fully, seal from or, partly or fully, connected with the outside of the compartments. The device (1) comprises a reference (6), or pseudo-reference electrode, and a counter electrode (7), or an auxiliary electrode, disposed in each compartment. The device (1) is suitable to be fasten on the on-site conductive material so that a surface (8) of the on-site conductive material forms at least a part of an inner surface (9) of each of the compartments and form a working electrode (9) of each compartment. The device (1) further comprises means (10) arranged to carry out electrochemical measurements, from the reference, the counter electrode and the working electrode of each compartment, and to determine corrosion rates of the on-site conductive material from the electrochemical measurements.

## Description

### Field of the invention

The present invention relates to the field of degradation/deterioration assessment of conductive parts of facilities/infrastructures. More specifically, the present invention pertains to liquid phase corrosion assessment of on-site metallic parts of facilities/infrastructures
In particular, the present invention deals with a device and a method for determining corrosion rates and monitoring corrosion of on-site metallic parts of facilities/infrastructures.

### Background to the invention

Corrosion of metal parts over time due to humid/liquid environment is a major economic and environmental issue. This degradation assessment is often tricky for several reasons.

First, the same metallic part of a facility can be subjected to several corrosion sources or corrosion conditions such as, for examples, rains, liquid flows, runoff, mists, winds, drafts and/or standing water. Each of these conditions and of these conditions combination is associated with a given value of corrosion rate of the metal part.

Second, the metallic structure aged over time and each part of the metallic structure will aged differently. Aging is heterogeneous and depends on the position of the part in the facility. Therefore, the corrosion rate of each part of the metallic structure will vary differently over time.

Third, the structure or metal part will undergo, locally or fully, maintenance operations or surface treatments, such as paintings. These operations/treatments will lead to various local various corrosion resistance.

Different techniques for corrosion rates assessment are known in the art and used for monitoring corrosion and assessing the loss of metal. However, these techniques present several limitations.

One knows in the art:
- the corrosion coupons used to measure mass loss of a metallic piece; corrosion coupons are the reference technique,
- the electrical resistance (ER),
- the zero resistance ammeter (ZRA),
- the ultrasonic thickness measurement (ETM), used to measure thickness loss,
- various electrochemical measurement techniques, such as electrochemical impedance spectroscopy (EIS), linear polarization resistance (LPR), harmonic analysis (CASP) or Tafel analysis.

The first limitation of the techniques used in the art is related to the use of model coupons (or materials sensitive). The corrosion rate is estimated from these model coupons having a composition that must be close from that of the structure to be assessed. In this configuration, the actual surface state of the on-site metallic structure to be assessed is not taken into account even though it has a major effect in the corrosion process. This configuration makes it possible to estimate a category or tendency of corrosion rather than the actual corrosion rate of the on-site metallic part to be assessed.

The second limitation concerns the environment. In this configuration, the effect of the environment is only partially taken into account through data from the facility. At best, the environmental parameters (winds, rains, rainwater level...) to which the facility is exposed may be simulated from data acquired at the facility. Nevertheless, this require setting up sensors networks positioned at different location of the facility. The management of these networks require regular and simultaneous data acquisition. Such networks of sensors is also expensive and require regular maintenance.

### Summary of the invention

An object of the invention is to provide a device and a method for corrosion monitoring of on-site metallic pieces which :
- overcomes at least one of the drawbacks of the state of the art,
- requires little maintenance,
- has low maintenance costs,
- is portable,
- is easy to use,
- takes into account the actual environmental conditions to which the metallic piece is exposed,
- takes into account the actual surface of the metallic piece, and/or
- mimics or simulates different corrosion conditions to which the metallic parts of the facility are actually exposed.

To this end, there is provided a device for electrochemical corrosion monitoring of an on-site conductive material, said device, comprising, or consisting in, at least two compartments or chambers or cells.

Each of the compartments is suitable to form an electrochemical cell.

Each of the compartments comprises two valves or flaps, preferably two opposite valves, being respectively positioned or disposed or arranged at, or on, a upper or top face and at, or on, a lower or bottom face of the device.

Each of the valves is arranged to selectively close or shut or lock and open or unseal the upper face or the lower face of its respective compartment so that each compartment is selectively, partly or fully, seal or isolate from or, partly or fully, connected with or in connection with the outside of the compartments.

The device comprises a reference, or pseudo-reference electrode, and a counter electrode, or an auxiliary electrode, disposed in each compartment.

The device is suitable to be fasten or attached or anchored or fixed on or against the on-site conductive material.

A surface or parts of a surface or surfaces of the on-site conductive material is/are intended to form or constitute at least a part of an inner surface of each of the compartments. The surface or parts of the surface or the surfaces of the on-site conductive material is/are intended to form or constitute a working electrode of each compartment.

The device further comprises means arranged and/or configured and/or programmed to carry out electrochemical measurements, from the reference, the counter electrode and the working electrode of each compartment, and to determine corrosion rates of the on-site conductive material from the electrochemical measurements.

Preferably, each compartment is arranged to form or constitute an electrochemical cell. More preferably, each compartment form or constitute an electrochemical cell.

Preferably, the upper face of device is or comprises or constitutes an upper face of each compartment and the lower face of the device is or comprise or constitute a lower face of each compartment.

Preferably, the upper face and lower face are located or comprises on opposite faces of the device.

Preferably, the outside of the compartment is also the outside of the device.

Preferably, the outside of the compartment is the environment or the atmosphere or the ambient air or the atmospheric conditions to which the conductive material, and so the device intended to be fasten to the conductive material, is exposed.

Preferably, for each compartment, the surface of the on-site conductive material, intended to form at least a part of the inner surface of a given compartment, is comprised or formed or constituted at least a part of a lateral face of the given compartment. Preferably, the surface of the on-site conductive material is intended to form the inner surface of a given compartment.

The on-site conductive material may be every of material suitable to form or constitute an electrochemical electrode. As non-limiting example, the on-site conductive material may be a metallic material.

Preferably, the device comprises three compartments or more.

Preferably, the valves are slidable or pivoting or rotating, or the like, components suitable to selectively free or clean or open or clear and close the upper face, or an opening or an aperture or a hole or an orifice or a face or a side of the upper face, and of the lower face, or an opening of the lower face.

Preferably, the device comprising fasten means arranged to fasten the device onto the on-site conductive material so that the on-site conductive material forms at least a part of a lateral face of the each of the compartment.

Preferably, the device further comprises a command unit.

Preferably, the command unit is arranged to selectively command each valve.

Preferably, the command unit is arranged to selectively command each valve so that:
- the two valves of a given compartment close their respective face and seal said given compartment from the outside to form an occluded retention compartment, and/or
- one of the valves of a given compartment close the upper or respectively the lower face of said given compartment and the other valve of said given compartment close the lower or respectively the upper face of said given compartment to form a non-occluded retention compartment, and/or
- the two valves of a given compartment open their respective face to fully connect said given compartment with the outside to form an atmospheric condition compartment.

Preferably, the command unit is arranged to command the valves to maintain, at least temporarily, a minimum level of liquid within at least one of the compartments.

Preferably, at least one of the compartments, preferably each compartment, further comprises means to measure a liquid level within at least one compartment.

Preferably, the means arranged to measure a liquid level are disposed or arranged or place within the at least one compartment.

Preferably, at least one of the compartments further comprises means to measure a pH of a liquid in at least one compartment.

Preferably, the means arranged to measure a pH of a liquid in at least one compartment are disposed or arranged or place within the at least one compartment.

Preferably, the device further comprises a porous material provided in at least one of the compartments.

Preferably, the porous material is disposed within said compartment to come into contact with the on-site conductive material.

Preferably, the porous material fills the compartment.

Preferably, the device is a one-piece or a monobloc or single bloc device.

Preferably, the device comprises comprising means suitable to provide an electrical contact or connection at the surface of the on-site conductive material.

According to the invention, there is also provided a method for electrochemical corrosion monitoring of an on-site conductive material, said method.

The method comprises a step consisting in selectively close and open, by means of the valves, the upper face and the lower face of each compartment of the device being fasten on the on-site conductive material.

The method further comprises a step consisting in carrying out electrochemical measurements, from the reference, the counter electrode and the working electrode of at least one compartment.

The method further comprises a step of determining corrosion rates of the on-site conductive material from the electrochemical measurements.

Preferably, the method further comprises:
- a step of forming occluded retention conditions within a given compartment by closing the two valves of said given compartment, and/or
- a step of forming non-occluded retention conditions within a given compartment by closing one of the valves and by opening the other valve of said given compartment, and/or
- a step of forming atmospheric conditions within a given compartment by opening the two valves of said given compartment.

Preferably, the method comprises a step of alternatively and/or sequentially open and close the upper face and/or the lower face of at least one of the compartments to modify or modulate the type of conditions reproduces or mimics within said at least one compartment.

Preferably, the method comprises a step of alternatively and/or sequentially open and close the upper face and/or the lower face of at least one of the compartments to modify or modulate a level of liquid within said at least one compartment.

Preferably, the method comprises a step of alternatively and/or sequentially open and close the upper face and/or the lower face of at least one of the compartments to switch from one type to another type of conditions within the at least one compartment.

Preferably, the method comprises the step consisting in corrosion rates monitoring of the on-site conductive material over time and/or relative to atmospheric conditions outside the device.

Preferably, the device according to the invention is suitable, more preferably arranged, and in an advantageous manner specifically arranged, to implement the method according to the invention. Thus, any feature of the device according to the invention may be transposed and/or integrated in the method according to the invention and vice versa.

### Brief description of the drawings

Further inventive objects, features and advantages will become apparent from the following detailed description of several embodiments of the invention with references to the drawings, in which:
- FIGURE 1 is a schematic side tilted view of an embodiment of the device according to the invention,
- FIGURE 2 is a schematic side tilted view of one compartment of the device illustrated FIGURE 1.

### Detailed description of embodiments of the invention

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention form the state of the art. This selection comprises at least a feature, preferably described by its technical function without structural features, or with a part of structural details if this part is sufficient to confer a technical advantage or to distinguish the invention from the state of the art on its own.

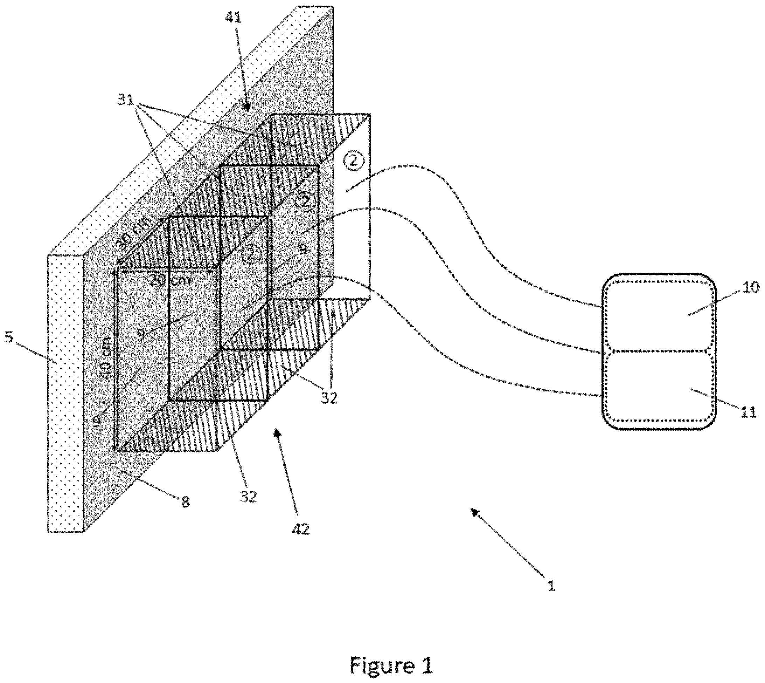

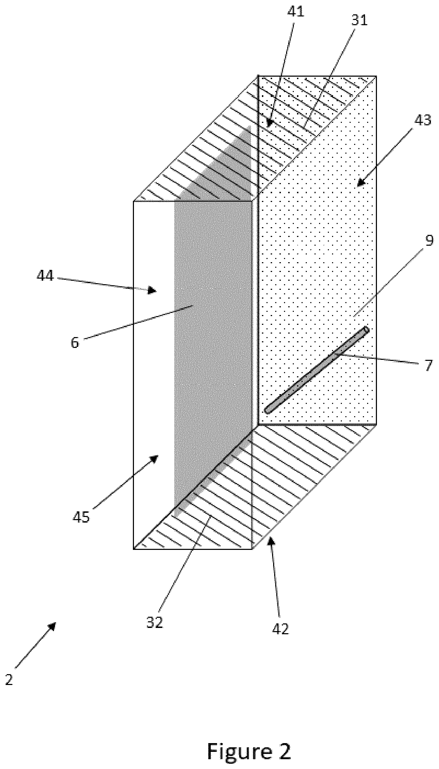

In reference to FIGURES 1 and 2, it is described an embodiment of a device for electrochemical corrosion monitoring 1 of an on-site conductive material 5, said device 1, according to the invention.

It is understood by corrosion of an on-site conductive material 5: a liquid phase corrosion. Indeed, the invention seeks to assess the actual degradation of actual conductive materials that are parts of facilities due to the actual environmental conditions. The invention also aims for assessing the degradation of distinct conductive parts of the facility due to the actual environmental conditions. Another aim of the invention is to assess the actual effect of the actual and local environmental conditions (weather conditions, microclimate...) on the degradation of conductive materials of a facility due to environmental conditions.

Although a major advantage of the invention is to be used directly on-site, the device 1 might as well be use in laboratory, in a climate chamber for instance. The invention will allow reproducing several environmental conditions from the one provided in the climate chamber.

The device 1 comprises at least two compartments 2. Each of the compartments 2 is arranged to form an electrochemical cell 2. To this end, a reference electrode 6 and a counter electrode 7 are disposed within each compartment 2. The skilled person knows the different type of material suitable to be used as reference electrode 6 and counter electrode 7.

As non-limiting examples: the reference electrode 6 (or pseudo- or quasi-reference electrode 6) may be a metal wire, or the reference electrode 6 may be a Silver or Platinum wire, the counter electrode 7 may made of Platinum, carbon felt, graphite or any other suitable material.

According to the embodiment, as non-limiting example and for information purposes only: the reference electrode 6 is a 20 mm long platinum wire having a diameter of 1 mm, the counter electrode 7 is a carbon felt electrode having a 18x38 square millimeters apparent surface.

According to the non-limiting embodiment, the compartments 2 are adjacent. According to the non-limiting embodiment, the compartments 2 are contiguous. Nevertheless, the invention also provides that the device 1 may comprise a divider or wall inserted or intercalated between two adjacent compartments 2.

The device 1 comprises two valves 31, 32 being respectively positioned at a upper face or side 41 and at a lower face or side 42 of the device 1. Each valve 31, 32 is arranged to selectively close and open the upper face 41 or the lower face 42 of its respective compartment 2 so that each compartment 2 is selectively, partly or fully, seal from or, partly or fully, connected with the surrounding atmosphere of the device 1.

The valves 31, 32 are mobile relative to the device 1.

Each valve 31; 32 is arranged to take two positions. Each valves 31, 32 is arranged to take a position, said opened position, in which the valves 31, 32 seal the compartment 2, or prevent communication between inside and outside of the compartment 2. Each valves 31, 32 is arranged to take a position, said closed position, in which the valve 31, 32 open the compartment to the outside or enable communication between inside and outside of the compartment 2.

Advantageously, the valves 31, 32 are pivotably mounted on the device 1 to enable closing and opening of a compartment 2. The skilled person will be able to consider the other equivalents means providing a similar or the same technical effect such as, for examples, slidable or rotating valves 31, 32.

According to the embodiment, the valves 31, 32 open and close the whole respective upper face 41 and lower face 41 of the compartment 2. It is also provided cases in which the upper face 41 and/or the lower face 42 comprises a wall in which an opening(s) or aperture(s)is/are provided. In that case, the valves 31, 32 open and close the opening(s) provided in said wall.

The size of the device 1 as well as the size of the compartments 2 may be of standard size or may be adapted, adjusted or arranged according to the facility and/or the on-site conductive material 5 and/or the local weather conditions.

In reference to FIGURE 2, as non-limiting example and for information purposes only, the size of each compartment 2 according to the embodiment is:
- 40 cm high ; in other words, the height of the vertical faces 43 and 44 according to the vertical dimension is 40 cm.
- 30 cm in width ; in other words the width of the horizontal faces 41 and 42 according to the horizontal dimension and of the vertical face 45 according to the horizontal dimension is 30 cm,
- 20 cm thick ; in other words, the thickness of the vertical faces 43 and 44 according to the horizontal dimension is 20 cm.

Especially but not exclusively, and as non-limiting example, it is provided that, for occluded retention conditions, one of the valves 31, 32 will be opened, from time to time, to allow water from rainfall and/or runoff and/or storm water and/or air humidity to penetrate the compartment 2. This will allow sufficient electrical conductivity between the electrodes 6, 7, 9 to carry out electrochemical measurements when they are needed and/or when weather conditions allow providing sufficient electrical conductivity between the electrodes 6, 7, 9. Preferably, the valves 31, 32 are maintained closed by default to provided occluded retention conditions and avoid corrosion. When electrochemical measurements of the compartment 2 under occluded conditions are needed, the valve 32 at the lower face 42 will preferably be open to allow humid air to enter the compartment 2. If weather conditions require to open the valve 31 at the upper surface (an preferably but not necessarily maintaining the valve 32 at the lower face 42 closed) to carry out electrochemical measurements, the valve 32 at the lower face 42 will then be opened to drain or empty the compartment 2 from water, after the electrochemical measurements, in order to get back to occluded retention conditions after electrochemical measurements.

As non-limiting example, it is provided that, for atmospheric conditions, the electrochemical measurements may be carried out when atmospheric conditions allows the measurements.

It will be understood, and obvious, that the electrochemical measurements may be carried out when electrical conductivity between the electrodes 6, 7, 9 is sufficient.

Under atmospheric conditions, runoff and/or storm water may flow into the compartment 2 (and/or air humidity) and will provide water (liquid or gaseous) within the compartment 2. The water thus provided will enable sufficient electrical conductivity between the electrodes 6, 7, 9 to carry out, at least temporarily and/or on a regular basis, the electrochemical measurements. Nevertheless, it will have no water accumulation inside the compartment 2.

Moreover, the electrochemical measurements may be carried out when relative humidity is higher than or equal to 90 %.

Such sufficient electrical conductivity (and/or relative humidity) takes place, among others, during fog episodes, maritime entrances or any other wet conditions. Since the invention seeks to assess liquid phase corrosion (that is corrosion caused by water), wheatear conditions will allow, at least from time to time, providing sufficient electrical conductivity.

Regarding the non-occluded retention conditions, the above description made above for the atmospheric conditions applies.

Nevertheless, and contrary to the atmospheric conditions, water accumulation inside the compartment 2 may also be considered for non-occluded retention conditions. As non-limiting example, it may be provided to open the valve 31 at the upper face 41 and closing the valve 32 at the lower face 42. This will allow water from rainfall and/or storm to pool or accumulate within the compartment 2. This amount of liquid water within the compartment 2 may provide or enable a higher rate of electrochemical measurements for the non-occluded retention conditions compared to the atmospheric conditions.

Preferably, each valves 31, 32 provides an hermetic closure. Therefore, it is understood that when each of the valves 31, 32 are closed, occluded conditions are provided within the compartment 2 sealed.

The device 1 is suitable or arranged to be fasten on the on-site conductive material 5.

The on-site conductive material 5 is intended to form at least a part of an inner surface 9 of each of the compartments 2 and/or a part of an inner surface of the device 1. The device 1 is intended to be fasten on the on-site conductive material 5 so that so that a surface 8 of the on-site conductive material 5 forms at least a part of an inner surface 9 of each of the compartments 2 and/or at least a part of an inner surface 9 of the device 1. According to the non-limiting embodiment, the surface 8 of the on-site conductive material 5 forms the inner surface 9, and in particular a lateral inner surface 9, of each of the compartments 2 and part of the inner surface 9 of the device 1, and in particular a lateral inner surface 9 of the device 1.

The on-site conductive material 5 is intended to form at least a part of a face 43 of each of the compartments 2 and/or at least a part of a face of the device 1. According to the non-limiting embodiment, the on-site conductive material 5 forms a face 43, and in particular a lateral face 43, of each of the compartments 2 and a face 43, and in particular a lateral face 43, of the device 1.

Nevertheless, it is also provided cases in which at least part of a face 43 of the device 1, a part of the lateral face 43 of the device 1, and at least a part of the face 43 of the compartments 2, a part of the lateral face 43 of the compartments 2 comprises a wall in which an opening(s) or aperture(s) is/are provided.

The surface 8 of the on-site conductive material 5 is intended to form a working electrode 9 of each compartment 2.

According to the embodiment, as non-limiting example and for information purposes only, the surface of the conductive material 5 forming the working electrode 9 of each compartments (when the device is mounted on the conductive material 5) is 30x40 square millimeters apparent surface.

According to the non-limiting embodiment, the reference electrode 7 extends along the width of the device 1. Preferably, the reference electrode wire 7 may extend perpendicularly to the surface of the on-site conductive material 5. Preferably, the reference electrode 7 may be mounted and/or fastened to one of the vertical faces 43, 44 of the device 1.

According to the non-limiting embodiment, the counter electrode 6 may be mounted and/or fastened to one of the vertical faces 43, 44 of the device 1 (preferably the face 43, 44 opposite to the face on which the reference electrode 7 is mounted and/or fastened).

The device 1 comprises means 10 arranged to carry out electrochemical measurements from the reference 6, the counter electrode 7 and the working electrode 9 of each compartment 2.

The means 10 arranged to carry out electrochemical measurements is arranged and/or configured and/or programmed to determine corrosion rates of the on-site conductive material 5 from the electrochemical measurements.

The device 1 may also comprise a treatment unit arranged and/or configured and/or programmed to determine corrosion rates of the on-site conductive material 5 from the electrochemical measurements and/or to carry out electrochemical measurements (in subtitution of the means 10 arranged to carry out electrochemical measurements in that case).

According to the embodiment, the device 1 comprises means suitable to provide an electrical contact or connection at the surface 8 of the on-site conductive material 5.

The skilled person knows the contactors suitable to be used to that purpose. For instance, the electrical contact may be press/pressing contact means. In that case, the electrical contact is provided when the device 1 is fasten onto the on-site conductive material 5.

The device 1 may comprise fasten means arranged to fasten the device 1 onto the on-site conductive material 5.

The skilled person knows the different type of ways or means suitable to be used to fasten the device 1 on the on-site conductive material 5 (even without providing fasten means to the device 1). As non-limiting example, adhesives, glues, screws, clamps and the like are suitable to fasten the device 1 onto the on-site conductive material 5.

According to the embodiment, the device 1 is a one-piece device 1.

This allows placing each of the compartment 2, and so each of the mimicked conditions (occluded retention conditions/compartment 2, non-occluded retention conditions/compartment 2 and the atmospheric conditions/compartment 2), at the place of the facility, preferably on the same piece of the on-site conductive material 5. Moreover, the device 1 may be placed in an easily accessible area.

Hence, the invention does not require the use of an array of sensors or devices disposed over the whole facility.

Preferably, the device 1 comprises a command unit 11 arranged and/or configured and/or programmed to selectively command each valve 31, 32 of each compartment 2.

Hence, the command unit 11 may be arranged to selectively command each valve 31, 32 to form the occluded retention conditions/compartment 2, non-occluded retention conditions/compartment 2 and the atmospheric conditions/compartment 2.

Nevertheless, each of the valves 31, 32 of each compartment 2 can be manually opened and closed.

The device 1 comprises means to measure a liquid level within at least one compartment 2. According to the embodiment, the device 1 comprises means to measure a liquid level disposed in each compartment 2.

The liquid level measurement(s) may be carried out on a regular basis and/or according to live weather conditions and/or current surrounding atmospheric conditions (measured) and/or pH value(s) measured within the compartment(s) 2.

The skilled person knows the means suitable to measure a liquid level. Preferably, means to measure a liquid level is a capacitive liquid sensor or probe.

According to the non-limiting embodiment, the means for measuring the liquid level may be mounted and/or fastened to the vertical faces 45 of the device 1. The vertical face 45 of the device 1 is opposite to and faces the surface of the on-site conductive material 5.

The device 1 comprises means to measure a pH of a liquid in at least one compartment 2.

The skilled person knows the means suitable to measure the pH of a liquid level. Preferably, means to measure a liquid level is a capacitive liquid sensor or probe.

It is also provided a method for electrochemical corrosion monitoring of the on-site conductive material 5. Preferably, the device 1 according to the invention implements the method.

The method comprises a step consisting in selectively close and open, by means of the valves 31, 32, the upper face 41 and the lower face 42 of each compartment 2 of the device 1 fasten on the on-site conductive material 5.

The method further comprises a step consisting in carrying out electrochemical measurements, from the reference 6, the counter electrode 7 and the working electrode 9 of at least one compartment 2.

The method further comprises a step of determining corrosion rates of the on-site conductive material 5 from the electrochemical measurements.

The skilled person will know the electrochemical techniques suitable to provide corrosion rates. For instance, the electrochemical technique uses to provide the electrochemical measurements may be electrochemical impedance spectroscopy, Electrochemical Frequency Modulation or Voltammetry (for instance Linear Sweep Voltammetry). The corrosion rates may be calculated and/or determined, from the electrochemical measurements, by equivalent circuit fitting, harmonic analysis, Linear polarization or Tafel analysis.

Especially but not exclusively, the corrosion rate is determined by linear polarization from data obtained by Voltammetry.

On table 1 is illustrated the advantages/drawbacks comparison of the state of the art devices and methods to the device 1 and method according to the invention. Criteria listed in table 1 are: criterion A: Environmental conditions reproduction accuracy, criterion B: accuracy of the reproduction of the actual corrosion of the on-site material, criterion C: costs, criterion D: implementation speed, criterion E: complexity, criterion F: Sensitivity and criterion G: accuracy of the actual corrosion rate of the on-site material.

**Table 1**

| | A | B | C | D | E | F | G |
|---|---|---|---|---|---|---|---|
| Coupons | - | - | + | - | ++ | + | - |
| ER | - | - | - | ++ | ++ | - | + |
| ZRA | - | - | + | + | + | + | - |
| ETM | - | - | - | + | - | - | - |
| Invention | + | + | - | ++ | + | + | + |

According to the non-limiting embodiment, the device 1 comprises three compartments 2.

In this advantageous but non-limiting example, each of the compartment 2 will mimics or reproduces one different type of environmental conditions to which a facility may be exposed. The inventors found that these three types of mimicked conditions allows covering all the actual environmental conditions.

In one configuration, occluded retention conditions are provided within a first compartment 2. The two valves 31, 32 of the first compartment 2 close their respective face 41, 42. The first compartment 2 is totally sealed by the valves 31, 32 from the surrounding atmosphere to form an occluded retention compartment 2. Occluded retention conditions mimic the sheltered parts of the facility which are not directly exposed to the ambient atmospheric conditions (winds, draught, fog and water (from rainfall and/or liquid flow and/or runoff)).

In another configuration, non-occluded retention conditions are provided within a second compartment 2. One of the two valves 31, 32 of the second compartment 2 is opened, preferably the valve 31 located at the upper face 41, and the other valve 32, 31 of the second compartment 2 is closed, preferably the valve 32 located at the lower face 42. The valve 32 seal the lower face 42 of the second compartment 2, and the second compartment 2 is partly sealed from the surrounding atmosphere, and the valve 31 open the upper face 41 of the second compartment 2, and the second compartment 2 is partly connected with the surrounding atmosphere, to form a non-occluded retention compartment 2. Non-occluded retention conditions mimic the parts of the facility which are exposed to ambient atmospheric conditions but are also exposed to standing water. Preferably, to further mimic non-occluded retention conditions, the device 1 comprises a porous material provided in the second compartment 2. The porous material is disposed within said second compartment 2 to come into contact with the on-site conductive material 5. The porous material will reproduce surfaces of the facility covered with foams or the like or other components/elements/fragments of porous material.

In another configuration, atmospheric conditions are provided within a third compartment 2. The two valves 31, 32 of the third compartment 2 open their respective face 41, 42. The third compartment 2 is fully connected with the surrounding atmosphere to form an atmospheric condition compartment 2. Atmospheric conditions mimic parts of the facility which are directly exposed to the ambient atmospheric conditions (winds, draught, fog and water (from rainfall and/or liquid flow and/or runoff), disposed in an aerated area without any particular water retention.

The command unit 11 may be arranged to command the valves 31, 32 to switch from the conditions (non-occluded retention conditions, occluded retention conditions or atmospheric conditions) mimic in a given compartment 2 (non-occluded retention compartment 2, occluded retention compartment 2 or atmospheric conditions compartment 2) to another conditions. Switching to given conditions (in a given compartment 2) to another conditions may be carried out according to actual weather conditions to which the facility is exposed and/or a liquid level within the given compartment 2 or a liquid level within another of the compartment 2 of the device 1 and/or a pH of the liquid within the given compartment 2 or of the liquid within another of the compartment 2 of the device 1.

In particular, the command unit 11 is arranged to command the valves 31, 32 to:
- maintain, at least temporarily, a minimum level of liquid within at least one of the compartment 2 of the device 1, and/or
- provide water accumulation, for instance during rainfall, within at least one compartment 2 of the device, and/or
- drain or empty, partially or totally, the compartment 2 from water.

For instance:
- switching, preferably temporarily, from an occluded retention compartment 2 or from an atmospheric conditions compartment 2 to a non-occluded retention compartment 2, and/or
- maintain, preferably temporarily, a minimum level of liquid and/or provide water accumulation, preferably temporarily, within at least one of the compartment 2,
may be carried out when electrochemical measurements within a given compartment 2 are needed or required but the liquid level within said given compartment is insufficient.

Switching temporarily from an occluded retention compartment 2 or from an atmospheric conditions compartment 2 to a non-occluded retention compartment 2 can be defined as temporarily maintaining a minimum level of liquid and/or temporarily providing water accumulation within an occluded retention compartment 2 or within an atmospheric conditions compartment 2.

If no temporarily switching from given conditions to another and/or temporarily maintaining a minimum level of liquid and/or temporarily providing water accumulation, the device 1 (because of lack of liquid within a given compartment 2) may be, from time to time, unable to carried out electrochemical measurements.

The invention is not restricted to embodiments described above and numerous adjustments may be made within the scope of the invention.

Thus, in combinable alternatives of previous embodiments:
- the device 1 comprises four or more compartments, and/or
- the device 1 may comprise a power supply or a battery, and/or
- the device 1 comprises connection means arranged to electrically connect the on-site conductive material 5 to the means 10 arranged to carry out electrochemical measurements and/or arranged to electrically connect the electrical contact or connection at the surface 8 of the on-site conductive material 5 to the means 10 arranged to carry out electrochemical measurements, and/or
- the device 1 comprises connection means for connecting the reference 6 and/or the counter electrode 7 to the means 10 arranged to carried out electrochemical measurements, and/or
- the device 1 comprises means for measuring the humidity or moisture level arranged within one, several or each compartment (2), the humidity or moisture level measurement(s) may be carried out on a regular basis and/or according to live weather conditions and/or current surrounding atmospheric conditions (measured) and/or pH value(s) measured within the compartment(s) 2, and/or
- the means arranged to carry out electrochemical measurements may be arranged to implement or carry out the electrochemical measurements and/or the command unit may be arranged to initiate or to command the means arranged to carry out electrochemical to implement or carry out the electrochemical measurements:
   - when the electrical conductivity between the electrodes 5, 6, 7 (and in particular between the working electrode 5 and the counter electrode 6) is greater than a threshold (a preset value for instance), and/or
   - according to or in response to external data, for instance (live) weather records and/or (live) weather conditions (preferably on-site measured), and/or
   - according to or in response to a liquid level, measured by the means arranged to measure a liquid level, within the compartment(s) 2 and/or the humidity or moisture level, measured by the means arranged to measure the humidity or moisture level, within the compartment(s) 2 and/or pH value(s) measured within the compartment(s) 2, and/or
- the means arranged to carry out electrochemical measurements may be arranged to implement or carry out electrical conductivity measurements between the electrodes 5, 6, 7 (and in particular between the working electrode 5 and the counter electrode 6) and/or the command unit may be arranged to initiate or to command the means arranged to carry out electrochemical to implement or carry out electrical said conductivity measurements, said electrical conductivity measurements may be carried out on a regular basis and/or according to live weather conditions and/or current surrounding atmospheric conditions (measured) and/or pH value(s) measured, and/or
- the method further comprises:
   - a step of forming occluded retention conditions within a given compartment 2 by closing the two valves 31, 32 of said given compartment 2, and/or
   - a step of forming non-occluded retention conditions within a given compartment 2 by closing one of the valves 31, 32 and by opening the other valve 31, 32 of said given compartment 2, and/or
   - a step of forming atmospheric conditions within a given compartment 2 by opening the two valves 31, 32 of said given compartment 2, and/or
- the method comprises a step of alternatively and/or sequentially open and close the upper face 41 and/or the lower face 42 of at least one of the compartment 2 to modify or modulate:
   - the type of conditions reproduces within said at least one compartment 2 and/or to switch from one type of conditions to another type, and/or
   - a level of liquid within said at least one compartment 2, and/or
- the corrosion rates determination may be carried out according to further data such as previous and/or live weather conditions and/or previous corrosion rates and/or previous and/or current surrounding atmospheric conditions (measured) and/or previous and/or current moisture level with the compartment(s) 2 and/or previous and/or current liquid level with the compartment(s) 2 and/or pH value(s) measured, and/or
- the method comprises the step consisting in corrosion rates monitoring of the on-site conductive material 5 over time and/or relative to and/or live weather conditions and/or previous corrosion rates and/or previous and/or current surrounding atmospheric conditions (measured) and/or previous and/or current moisture level with the compartment(s) 2 and/or previous and/or current liquid level with the compartment(s) 2 and/or pH value(s) measured.

## Claims

1. Device for electrochemical corrosion monitoring (1) of an on-site conductive material (5), said device (1), comprising:
- at least two compartments (2), each of the compartments:
▪ is suitable to form an electrochemical cell,
▪ comprises two valves (31, 32) being respectively positioned at a upper face (41) and at a lower face (42) of the device, each of the valves being arranged to selectively close and open the upper face or the lower face of its respective compartment so that each compartment is selectively, partly or fully, seal from or, partly or fully, connected with the outside of the compartments,
- a reference (6), or pseudo-reference electrode, and a counter electrode (7), or an auxiliary electrode, disposed in each compartment,
the device is suitable to be fasten on the on-site conductive material so that a surface (8) of the on-site conductive material forms at least a part of an inner surface (9) of each of the compartments and form a working electrode (9) of each compartment;
the device further comprises means (10) arranged to carry out electrochemical measurements, from the reference, the counter electrode and the working electrode of each compartment, and to determine corrosion rates of the on-site conductive material from the electrochemical measurements.

2. Device (1) according to claim 1, comprising three or more compartments (2).

3. Device (1) according to claim 1 or 2, wherein the valves (31, 32) are slidable or pivoting or rotating, or the like, components suitable to selectively free and close the upper face (41), or an opening of the upper face, and of the lower face (42), or an opening of the lower face.

4. Device (1) according to any of the preceding claims, comprising fasten means arranged to fasten the device onto the on-site conductive material (5) so that the on-site conductive material forms at least a part of a lateral face (43) of the each of the compartment (2).

5. Device (1) according to any of the preceding claims, further comprising a command unit (11) arranged to selectively command each valve (31, 32) so that:
- the two valves of a given compartment (2) close their respective face (41, 42) and seal said given compartment from the outside to form an occluded retention compartment, and/or
- one of the valves of a given compartment close the upper or respectively the lower face of said given compartment and the other valve of said given compartment close the open or respectively the upper face of said given compartment to form a non-occluded retention compartment, and/or
- the two valves of a given compartment open their respective face to fully connect said given compartment with the outside to form an atmospheric condition compartment.

6. Device (1) according to the preceding claim, wherein the command unit (11) is arranged to command the valves (31, 32) to maintain, at least temporarily, a minimum level of liquid within at least one of the compartments (2).

7. Device (1) according to any of claims 1 to 5, wherein at least one of the compartments (2) further comprises means to measure a liquid level within at least one compartment.

8. Device (1) according to any of claim 1 to 5, wherein at least one of the compartments (2) further comprises means to measure a pH of a liquid in at least one compartment.

9. Device (1) according to any of the preceding claims, further comprising a porous material provided in one of the compartments (2) and disposed within said compartment to come into contact with the on-site conductive material (5).

10. Device (1) according to any of the preceding claims, wherein said device is a one-piece device.

11. Device (1) according to any of the preceding claims, further comprising means suitable to provide an electrical contact or connection at the surface (8) of the on-site conductive material (5).

12. Method for electrochemical corrosion monitoring of an on-site conductive material (5), said method comprising the steps consisting in:
- selectively close and open, by means of valves (31, 32), an upper face (41) and a lower face (42) of each compartment (2) of a device (1), said device, being fasten on the on-site conductive material so that a surface (8) of the on-site conductive material form a part of an inner surface (9) of each of the compartments and form a working electrode (9) of each compartment; said device comprises:
• at least two compartments, each of the compartments:
▪ is suitable to form an electrochemical cell,
▪ comprises two valves being respectively positioned at a upper face and at a lower face of the device,
▪ comprises a reference (6), or pseudo-reference electrode, and a counter electrode (7), or an auxiliary electrode,
- carrying out electrochemical measurements, from the reference, the counter electrode and the working electrode of at least one compartment, and
- determining corrosion rates of the on-site conductive material from the electrochemical measurements.

13. Method according to claim 12, further comprising:
- a step of forming occluded retention conditions within a given compartment (2) by closing the two valves (31, 32) of said given compartment, and/or
- a step of forming non-occluded retention conditions within a given compartment by closing one of the valves and by opening the other valve of said given compartment, and/or
- a step of forming atmospheric conditions within a given compartment by opening the two valves of said given compartment.

14. Method according to claim 12 or 13, further comprising a step of alternatively and/or sequentially open and close the upper face (41) and/or the lower face (42) of at least one of the compartments (2) to modify or modulate:
- the type of conditions reproduces within said at least one compartment, and/or
- a level of liquid within said at least one compartment.

15. Method according to any of claim 12 to 14, further comprising the step consisting in corrosion rates monitoring of the on-site conductive material (5) over time and/or relative to atmospheric conditions outside the device (1).
